# EUROPEAN PATENT APPLICATION

(11) **EP 1 382 893 A1**
(43) Date of publication of application: **21.01.2004**
(21) Application number: 03015018.9
(22) Date of filing: 02.07.2003
(51) Int. Cl.: F16K 15/04, F16K 17/04, B60T 11/10

(54) **Ball valve for hydraulic circuits**

(30) Priority: 12.07.2002 IT BO20020066 U
(71) Applicant: TRW Automotive Pumps S.r.l., 44020 San Giovanni Di Ostellato, Province of Ferrara (IT)
(72) Inventor: Poppi, Maria Elena, 44020 San Giovanni Di Ostellato (IT)
(74) Representative: Porsia, Dino, Dr.

(57) **Abstract**

The end of the spring (12) directed towards the ball (8) houses with sufficient radial clearance in a cup or basket (10) which slides axially guided in the seat (6) of the body of the valve, which is provided with lateral openings (11) for the passage of the fluid and which is carrying at the centre of its base, a recess impression (9) for the co-operation with the ball (8). The other end of the spring (12) opposed to the one which is toward the ball, surrounds a centring projection (15) obtained on the reaction body (14) which carries the openings (16, 16') for the passage of the liquid which flows through the valve in the opening phase. A similar centring projection (13, 13') for the spring (12) may be provided also on the internal face of the bottom of the cup or basket (10) above mentioned.

## Description

The invention relates to the ball valves for hydraulic circuits, for example of the kind used with the function of single-acting unidirectional valves or particularly of safety or maximum pressure valves and for such valves refers to the improvements in the portions destined to the contact with the retaining spring which urges the ball of the valve in the closing position.

In the ball valves realised according to the known art, the spring acts on the ball sometimes directly and sometimes with the interposition of a disk provided on a face, in the centre, with a little impression in recess or with a hole for the centred cooperation with the ball and on the opposite face of which, usually flat, rests the end of the spring. The end of the spring which is opposed to the one toward the ball, usually rests on a simple flat reaction surface, provided with openings for the passage of the fluid when the valve is opened. In the valves realised according to the known art, specially in the maximum pressure valves, the ball and the whole of the means which urge same into closing position, are subjected to intense mechanical and thermal stresses which may modify the axial alignment of the reaction spring with regard to the ball and the seat of the valve, modifying the functioning features of the same valve.

Object of the invention is to obviate to these drawbacks of the known art, with the following idea of solution. The end of the spring toward the ball, houses with sufficient radial clearance in a cup or basket which slides axially guided in the seat of the body of the valve, which is provided with lateral slots or openings for the passing of the liquid and which is carrying at the centre of its base, a recess impression for the co-operation with the ball. The other end of the spring, opposed to the one toward the ball, surrounds a centring projection obtained on the reaction body which carries the openings for the passing of the liquid when the valve is opened. A similar centring projection for the spring may be provided also on the internal face of the bottom of the cup or basket.

Further features of the invention, and the advantages deriving therefrom, will appear better evident from the following description of a preferred embodiment of same made with reference to the figures of single attached sheet of drawing, in which:
- Figure 1 shows, longitudinally sectioned, a maximum pressure cartridge valve, improved according to the invention;
- Figure 2 is a plan view from above of the cup or basket which co-operates with the end of the spring toward the ball;
- Figure 3 is a plan view of the reaction disc of the spring;
- Figures 4 and 5 show laterally and with portions in section as in Figure 1, embodiments of the cup or basket which co-operates with the end of the spring toward the ball.

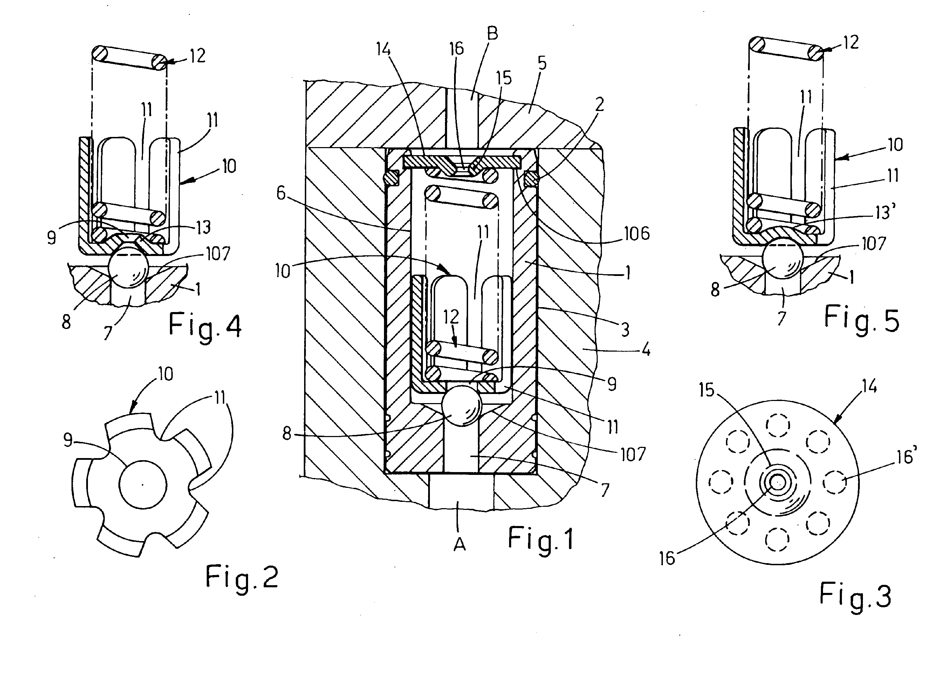

In Figure 1, with reference number 1 is indicated the body of the valve which, in the example which is referred to, is constituted by a cartridge housed with an outer sealing ring 2 in a seat 3 obtained for example in the body 4 of a pump or other hydraulic apparatus and closed by the cover 5. Reference letters A and B indicate respectively the high and low pressure ducts intercepted by the valve which is referred to. It is to be understood that the improvements according to the invention should be protected also for the non-cartridge valves, but with fixed body and for any ball valve, also of not maximum pressure, for example also for the single-acting unidirectional valves.

The body 1 of the valve is provided with a cylindrical seat 6 upon one end of which there is opened with conical flaring 107, the axial hole 7 connected to the high pressure duct A. On the flaring end 107 of the hole 7 there is housed the intercepting steel ball 8, which in opposition to the hole 7 partially houses and closes the small hole 9 obtained at the centre of the bottom of a cup 10 of suitable material (see also Figure 2) which slides axially guided and with a sufficient clearance in the seat 6 and which is provided at least on its outer side surface, with longitudinal and angularly equal-spaced slots 11 which in the example are interesting the lateral wall of the cup for the whole of its thickness and which enlarge at the base of the same cup that for this reason takes more properly the shape of a basket. The openings 11 are such to form in the whole an opening of the section necessary to the passing of the liquid when the ball 8 is pushed by the high pressure to open the hole 7.

The basket 10, in the example which is referred to, has a length which is about the half of the length of the seat 6, but it is to be understood that this component may be differently dimensioned and which can be realised with any suitable working process.

Inside the basket 10 houses with sufficient radial clearance the counter acting cylindrical helical spring 12 with pushes the whole unit 10, 8 in the condition of closure of the hole 7. The face of the bottom wall of the basket, upon which is resting the end of counter acting spring 12, may be flat as from Figure 1, may be provided with a slight perimeter taper (not shown) to ensure the centring of the spring with respect to the axis of the same basket, or, also for this purpose, said bottom wall of the basket may be provided in its centre with a projection 13 axially opened as from Figure 4 or closed as shown with reference numeral 13' in Figure 5. In addition to favouring the centring of the spring 12 in the basket 10, the projection 13 or 13' realises on the other front also an efficacious resting seat for the ball 8.

The end of the spring 12 which is opposed to the one toward the ball 8, rests on a reaction disk 14 (see also Figure 3) which is fixed on the tapered end 106 of the seat 6 with a calking operation or with other suitable techniques. The disk 14 is characterised by the fact that it is carrying in the centre of the face toward the spring 12, a conical projection 15 which has the function of centering the same spring, in such a manner to maintain the same with a correct axial alignment in the seat 6. The projection 15 is axially provided with a through hole 16 having a suitable diameter, for the communication with the low pressure duct B. It is to be understood that the projection 15 may have a different and equivalent shape to the conical shape. It is also to be understood that alternatively or together with the central hole 16, the reaction disk 14 may be provided with small perimetral slots or with small perimetral holes with parametric features, as shown for example with dotted sign and with reference numeral 16' in the same Figure 3.

It is clear how, with the described improvements, the whole movable unit which operates on the intercepting ball 8, always results perfectly aligned on the axis of the seat 6 and for this reason presents constant features of functioning.

## Claims

1. Ball valve with safety functions or maximum pressure functions or suitable for other uses, provided with a spring (12) which pushes a ball (8) to close an inlet orifice (107, 7) connected to one of the ducts (A), of the hydraulic circuit to be controlled, **characterised by** the fact that the end of said spring directed towards the ball, is housed in a cup (10) which with its lateral surface slides axially guided, with sufficient clearance, in the seat (6) of the body of the valve (1), and which is at least laterally and for the whole of its length provided with slots or openings (11) for the passage of the liquid when the same cup with said ball (8) are displaced by the pressure of the same liquid, the base of the said cup being provided with a central recessed impression, engaged on one side by said ball (8).

2. Valve according to claim 1, in which the spring (12) engages said cup (10) with sufficient radial clearance.

3. Valve according to claim 1, in which the lateral and longitudinal slots or openings (11) of the cup (10), interest the lateral wall of the same cup for the whole of its thickness.

4. Valve according to claim 3, in which the bottom wall of the cup (10) carries an enlargement of the lateral openings (11) of the same cup which for this reason properly takes the shape of a basket.

5. Valve according to claim 1, in which said impression provided on the base of the cup or basket (10) consists of a hole (9) which is round and which has a diameter which is lower to the equatorial diameter of the said ball (8).

6. Valve according to claim 1, in which the impression provided on the base of the cup or basket (10) consists of a recess conformation (13') on the front toward the ball, to partially house the said ball (8) and which is projecting on the front toward the spring, in order to form a means which centres the same spring (12) and co-axially positions the same in the basket.

7. Valve according to claim 1 in which the impression provided on the base of the cup or basket (10) consists of a recess conformation (13') on the front toward the ball, to partially house the same ball (8) and which is projecting on the front toward the spring, to axially centre the same spring (12) and which is provided in the centre with a small hole (9).

8. Valve according to claim 1, in which the end of the spring (12) which is opposed to the one which acts on the base of the cup or basket (10) is axially centred in the seat (6) of the valve thanks to the cooperation with a conical projection (15) or having another suitable shape, provided at the centre of said body (14) which closes said seat and which is axially and/or perimetrally provided with slots or openings having parametric features (16, 16') for the passage of the liquid toward the second duct (B) to which is connected the valve which is referred to.
